# EUROPEAN PATENT SPECIFICATION

(11) **EP 3 480 565 B1**
(45) Date of publication and mention of the grant of the patent: **09.09.2020**
(21) Application number: 18204197.0
(22) Date of filing: 02.11.2018
(51) Int. Cl.: G01D 18/00

(54) **METHOD OF CALIBRATION FOR A VALVE**
VERFAHREN ZUR KALIBRIERUNG EINES VENTILS
PROCÉDÉ D'ÉTALONNAGE POUR UNE SOUPAPE

(30) Priority: 02.11.2017 IT 201700124835
(43) Date of publication of application: 08.05.2019
(73) Proprietor: MASMEC S.p.A., 70026 Modugno (IT)
(72) Inventor: MAGNIFICO, Leonardo, 70026 Modugno (BA) (IT); CARBONE, Francesco, 70026 Modugno (BA) (IT); AMBRUOSI, Giancarlo, 70026 Modugno (BA) (IT); DE LUCIA, Massimo, 70026 Modugno (BA) (IT)
(74) Representative: Bongiovanni, Simone

(56) References cited:
- EP-A1- 1 329 659
- EP-A2- 0 145 402
- EP-A2- 2 690 330
- WO-A1-2013/057671
- DE-A1-102009 002 029

## Description

### CROSS-REFERENCE TO RELATED APPLICATIONS

This patent application claims priority from Italian patent application No. 102017000124835 filed on November 2, 2017.

### TECHNICAL FIELD

The invention relates to a method for the calibration of a pressure-limiting valve.

### BACKGROUND ART

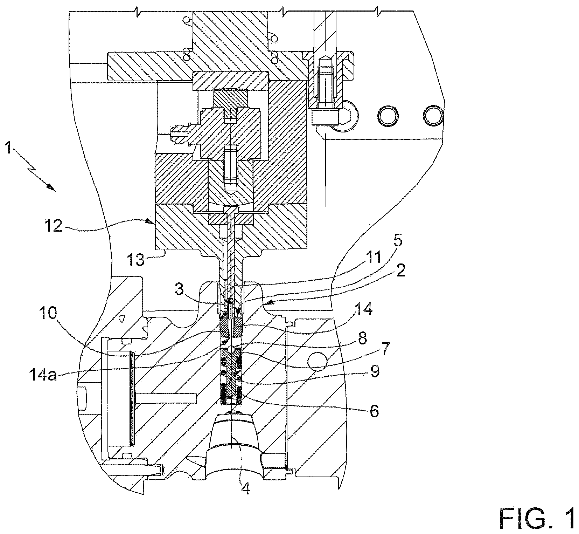

Figure 1 shows a calibration method of a pressure-limiting valve 1 (hereinafter also referred to as valve 1) of a known type according to the prior art. In particular, in order to explain the known calibration method, the main components of the valve 1 will be described.

In detail, the valve 1 comprises a valve body 2, provided with a central hole 3 extending along an axis 4. The central hole 3 defines, at a first end thereof, an opening 5 and, at a second end, a valve seat 6; furthermore, the valve seat 6 houses a mobile element 7, which comprises an oblong portion coaxial to the axis 4 and is provided, at a wider portion thereof facing the opening 5, a recess, designed to contain a ball 8 (for example made of metal). The valve seat 6 further houses a spring 9, which is arranged coaxial to the axis 4 and is provided with a first end, which is arranged in contact with a bottom wall of the valve seat 6, and with a second end, which is arranged in contact with the wider portion of the mobile element 7.

The valve 1 further comprises a cylindrical reference element 10, which is arranged in the central hole 3 so as to be in abutment against the first end of the mobile element 7. The cylindrical reference element 10 has a central portion defining a channel 11 coaxial to the axis 4.

In particular, according to known methods, the cylindrical reference element 10 is fitted into the central hole 3 at a predetermined height, so that the spring 9 assumes a predetermined compression value and pushes the ball 8 against the cylindrical reference element 10 with a force F that is equal to the calibration value.

This operation is carried out by means of a calibration tool 12, which is provided with a punch 13 penetrating the opening 5 and in abutment against the cylindrical reference element 10, thus axially moving it.

In this way, the spring 9 is compressed by a pushing force Fₛ, which is applied by the cylindrical reference element 10 until a height is reached, which is such that the force F corresponds to the objective value of the desired force for the valve 1.

In order to control the pushing force Fₛ of the calibration tool 12 and, hence, the extent to which the spring 9 needs to be compressed, the pushing force Fₛ must be measured in a direct manner; the measurement is usually carried out using a point 14, coaxially mounted in the punch 13, as well as the ball 8 and, in this operating step, the friction contributions deriving from the cylindrical reference element 10 being fitted in the central hole 3 are neglected.

However, in known calibration methods, the direct measurement of the pushing force Fₛ can be complicated; in fact, the calibration process can require a fairly large number of steps in order to obtain a correctly calibrated valve 1. Furthermore, the calibration value must be constant in time.

The prior art is defined in documents WO2013/057671, EP1329659 and EP 2690330.

### DISCLOSURE OF INVENTION

The object of the invention is to provide a valve calibration method, which overcomes the drawbacks of the prior art.

According to the invention, a valve calibration method as defined in the appended claims is provided.

### BRIEF DESCRIPTION OF THE DRAWINGS

The invention will be best understood upon perusal of the following detailed description of a preferred embodiment, which is provided by way of example and is not limiting, with reference to the accompanying drawings, wherein:
- Figure 1 shows a cross section of a known pressure-limiting valve;
- Figure 2 shows a flowchart of the calibration method; and

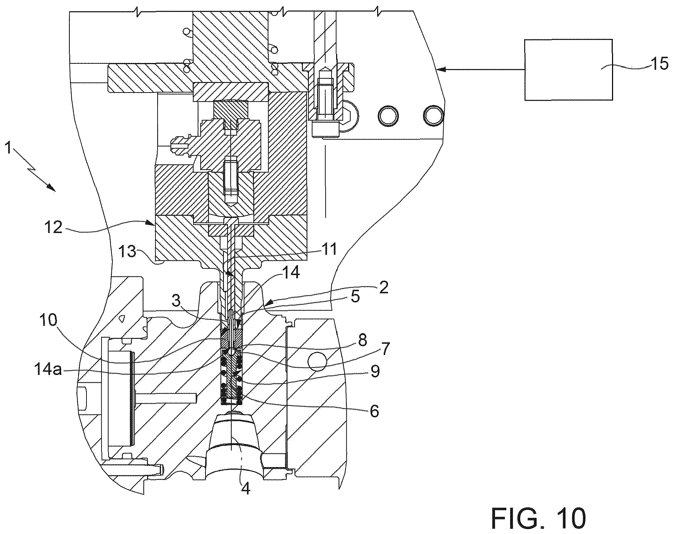

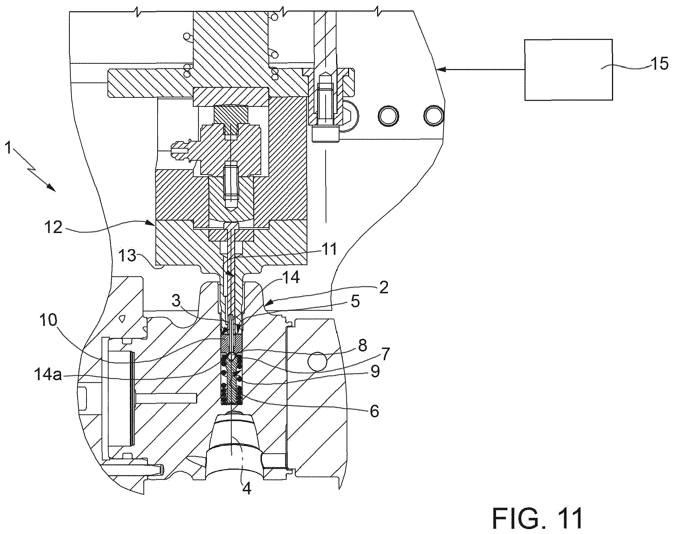

- Figures 3-16 show cross sections of a pressure-limiting valve in subsequent steps of the calibration method of Figure 2.

### BEST MODE FOR CARRYING OUT THE INVENTION

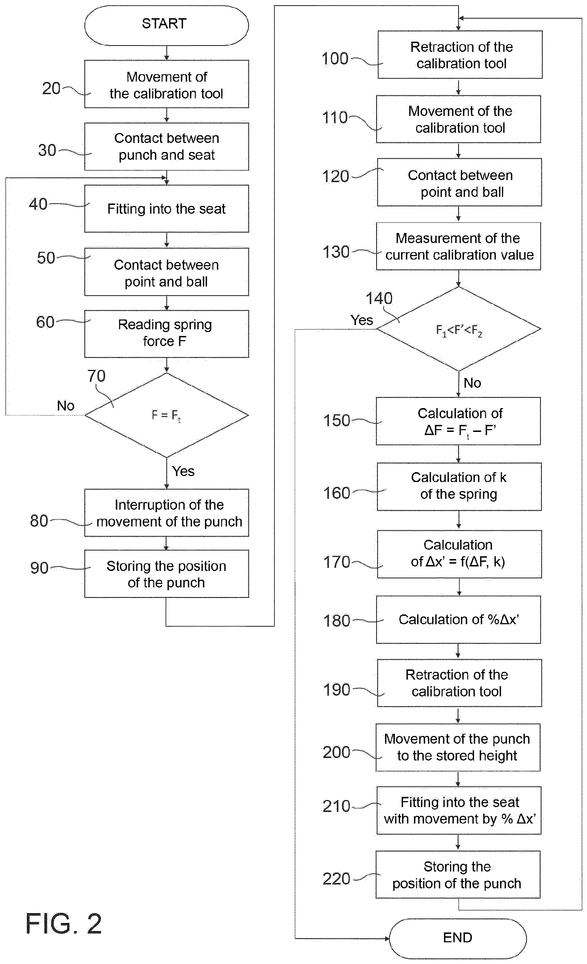

Figure 2 schematically shows the calibration method applied to the valve 1 of Figure 1. In particular, the method is based on an iterative and adaptive algorithm, wherein it is possible to optimize the number of steps needed to complete the calibration of the valve 1.

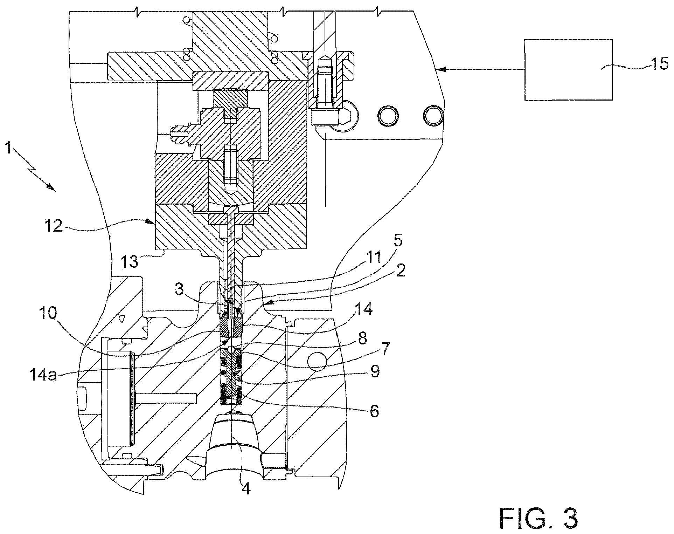

In detail, the pressure-limiting valve 1, which is schematically shown in Figure 3, comprises a valve body 2, provided with a cylindrical central hole 3 extending along an axis 4. The cylindrical central hole 3 defines, at a first end thereof, an opening 5 and, at a second end, a valve seat 6; in particular, the valve seat 6 houses a mobile element 7, which comprises an oblong portion coaxial to the axis 4 and is provided, at a wider portion thereof facing the opening 5, a recess, designed to contain a ball 8 (for example made of metal).

The valve seat 6 further houses a spring 9, coaxially arranged to the axis 4 and provided with a first end, which is arranged in contact with a bottom wall of the valve seat 6, and with a second end, which is arranged in contact with the wider portion of the mobile element 7.

The valve 1 further comprises a cylindrical reference element 10, which is arranged in the central hole 3 so as to be in abutment against the first end of the mobile element 7. The cylindrical reference element 10 has a central portion defining a channel 11 coaxial to the axis 4.

In order to carry out the calibration operations, according to the present invention, a known calibration tool 12 is used, i.e provided with a punch 13, which moves along the axis 4 under the thrust of motor means (not shown herein and of a known type), controlled by an electronic control unit 15. The punch 13 carries a point 14 (for example made of metal), which is coaxial to the punch 13 and is associated with a sensor (for example a load cell, which is not shown herein), which detects the force applied at the front end 14a of the point 14.

In use, in rest conditions, the front end 14a projects from a surface of an end of the punch 13.

At the beginning of the calibration process (Figure 3 shows an initial situation of the valve 1), the calibration tool 12 is arranged above the valve 1 with the punch 13 partially inserted in the valve seat 6 and does not move; the cylindrical reference element 10 is housed in the valve seat 6 and is spaced apart from the ball 8. The wider portion of the mobile element 7 rests on the spring 9, which is in a rest position.

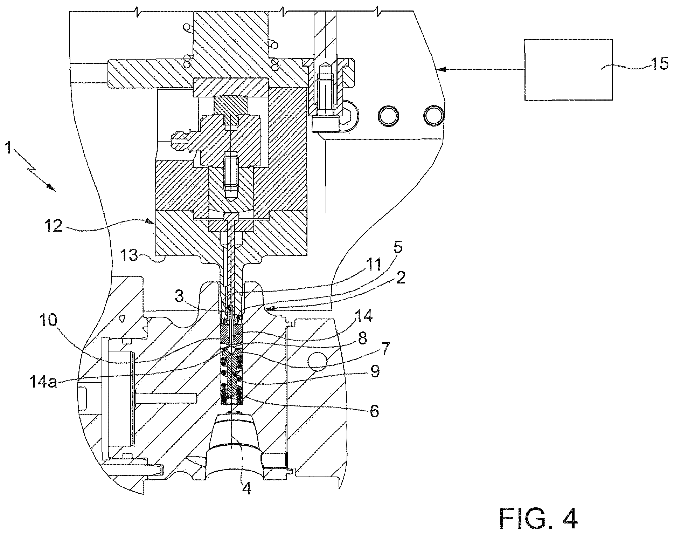

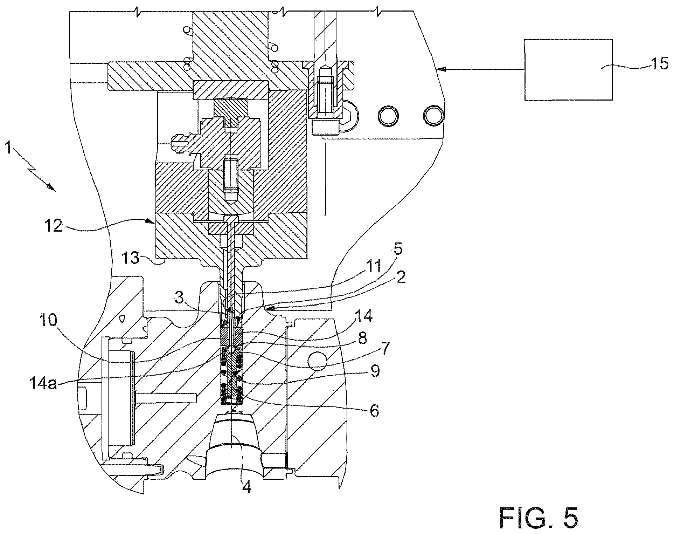

With reference to Figure 2, which shows the operations carried out under the control of the electronic control unit 15 acting according to the method disclosed herein, an initial calibration cycle is carried out, which comprises a block 20 leading to the movement of the punch 13 relative to the initial position shown in Figure 3; in particular, the punch 13 axially moves downwards (as shown in more detail in Figure 4), moving towards the bottom of the valve seat 6, and is in abutment against the cylindrical reference element 10, block 30, which is axially moved, thus moving away from the opening 5 and moving closer to a bottom wall of the valve seat 6. The last operating step is shown in further detail in Figure 5, which shows a cross section of the valve 1 carrying out said operating step.

In this way, the cylindrical element 10 starts being fitted into the cylindrical central hole 3 (block 40) due to the increasing interference created between the cylindrical inner wall of the valve seat 6 and the cylindrical outer walls of the cylindrical reference element 10.

Following the movement of the punch 13, the front end 14a of the point 14 comes into contact (block 50) with the ball 8 and the load cell (not shown) starts measuring the force F (block 60), which is proportional to the compression of the spring 9 according to the known formula *F = k* · *x.*

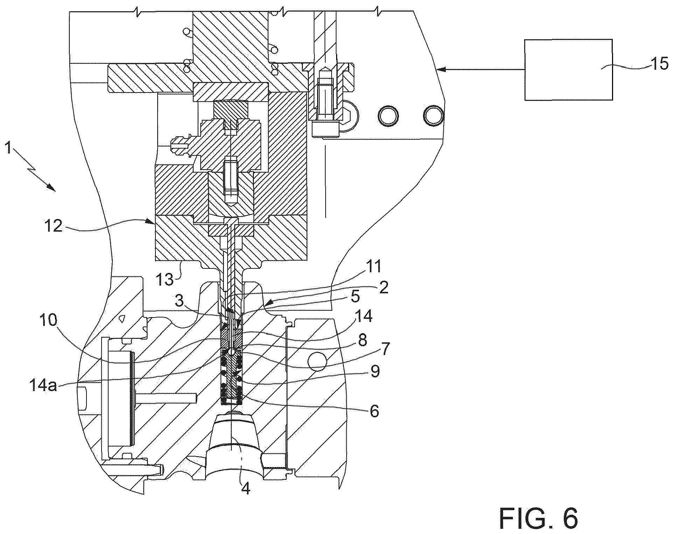

The measured force F is compared with an objective force Fₜ (block 70) and the movement of the punch 13 continues as long as the measured force F is smaller than the objective force Fₜ. This step is shown in further detail in Figure 6. The objective force Fₜ is a predetermined value, which was previously calculated. Otherwise, the objective force can be calculated online.

In this way, the spring 9 is compressed in an increasing proportional manner, so as to increase the value of the compression force F in a linear fashion.

When the value of the measured force F is equal to the objective force Fₜ, the downward movement of the punch 13 is interrupted (block 80). In this instant, the position of the punch 13 (block 90) along the axis 4 and, hence, the position (objective height Δxₜ) of the reference element 10 along the axis 4 are measured.

The objective force Fₜ is conveniently extrapolated from a characteristic curve (which is not shown) of the spring 9; for example, the characteristic curve of the spring 9 is an increasing, linear curve.

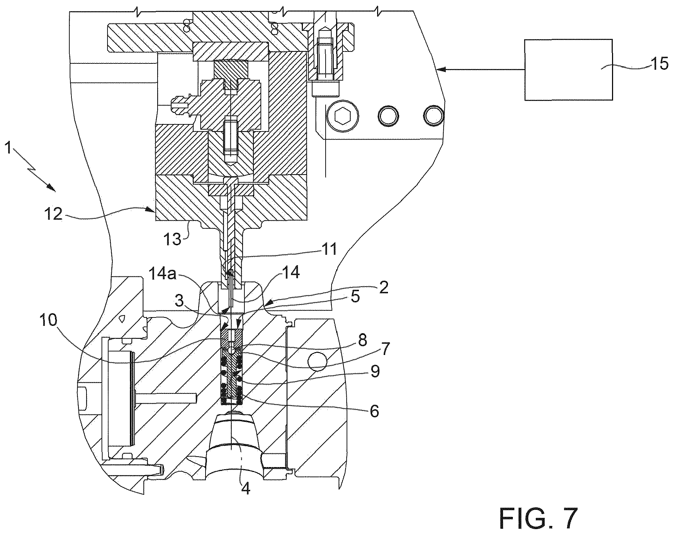

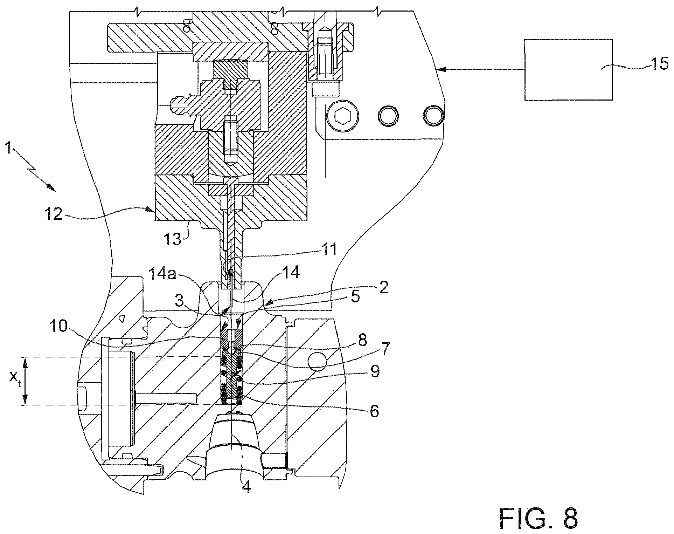

With reference to block 100 following block 90, the punch 13 is retracted, moving it in a direction that is contrary to the previous one. In detail, as shown in Figure 7, the point 14 is also retracted together with the punch 13; in this instant, the cylindrical reference element 10 is steadily fitted in the valve seat 6 at the objective height Δxₜ (Figure 8).

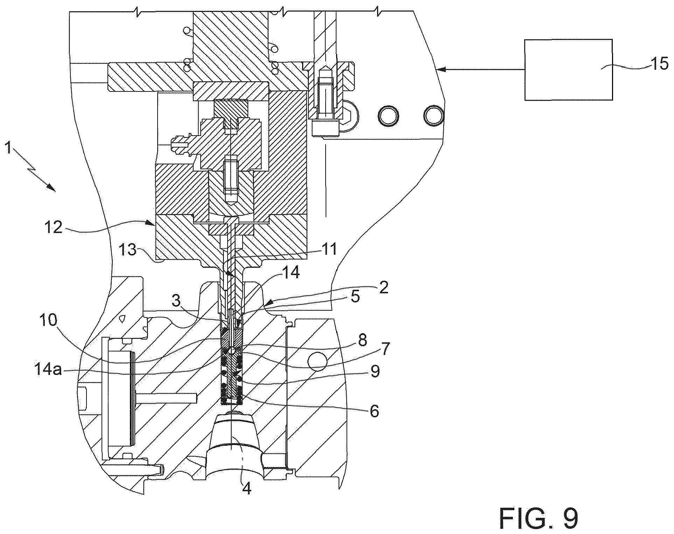

Following, a subsequent control cycle of the calibration carried out, Figure 2, is performed, during which the punch 13 is being moved, block 110, in such a way that the point 14 comes into contact with the ball 8 (shown in Figure 9).

When the punch 13 reaches the position reached in step 80 (block 120), the force applied to the point 14 is measured again.

The point 14 comes into contact with the ball 8 without applying a further compression force to the spring 9.

With reference to block 130, a current calibration force F' of the load cell (not shown) is measured, said current calibration force F' corresponding to the current calibration force value of the valve 1.

Subsequently, Figure 2, a decisional block 140 compares the current calibration force F' with an upper force limit F₂ and a lower force limit F₁. In particular, the upper force limit F₂ and the lower force limit F₁ are uniquely defined starting from the technical specifications resulting from the correlation between the compression force of the spring 9 and the pressure value for the opening of the valve 1.

In particular, if the current calibration force F' ranges between the lower force limit F₁ and the upper force limit F₂, the method ends (YES output of block 140), since the initial calibration cycle defined by the operations of blocks 20-90 helped placing the reference element in a position such that the spring 9 is compressed in a correct manner and delivers a force that corresponds to the desired one.

If, on the other hand, the current calibration force F' does not range between the upper force limit F₂ and the upper force limit F₁, a force difference ΔF is calculated (NO output of bock 140 towards block 150), which is equal to the difference between the objective force Fₜ and the current calibration force F'.

The force difference ΔF represents the difference between the current calibration value F' and the objective calibration value Fₜ and is a function of the current position of the reference element 10 in the i-th step of the algorithm implemented herein and, hence, of the current compression value of the spring 9 with respect to the objective calibration value Fₜ.

Subsequently, block 160, the elastic constant k of the reaction spring 9 is calculated (by means of the formula *k = Fₜ*/Δ*xₜ*), since the values of the objective force Fₜ and of the objective height Δxₜ were previously stored.

With reference to block 170, a correct height Δx' is calculated based on the force difference ΔF of the elastic constant k, by means of the formula Δ*x'* = Δ*F*/*k.*

Subsequently, still with reference to Figure 2, after having obtained the value of the correct height Δx', a reduced correct height %Δx' is calculated (step 180) by calculating a percentage (e.g. 30%) of the correct height Δx' .

In detail, the percentage of the correct height Δx' is used as a reference in order to determine a new value of the current calibration force F' capable of meeting the requirements set by the decisional block 140.

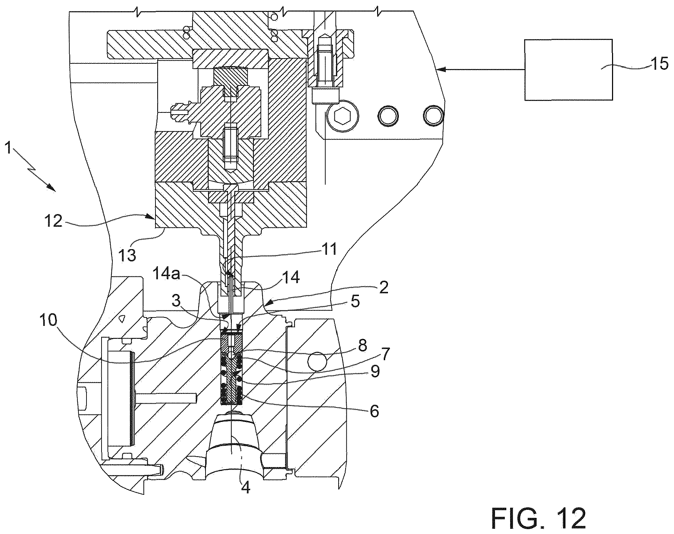

To this regard, block 190, the punch 13 is retracted and the point 14 moves away from the ball 8, as shown in detail in Figure 12.

Subsequently, Figure 2, block 200, the punch 13 is moved so that it is placed at the reduced correct height %Δx' (clock 210) and this position is stored by means of a position transducer (block 220), controlled by the electronic control unit 15.

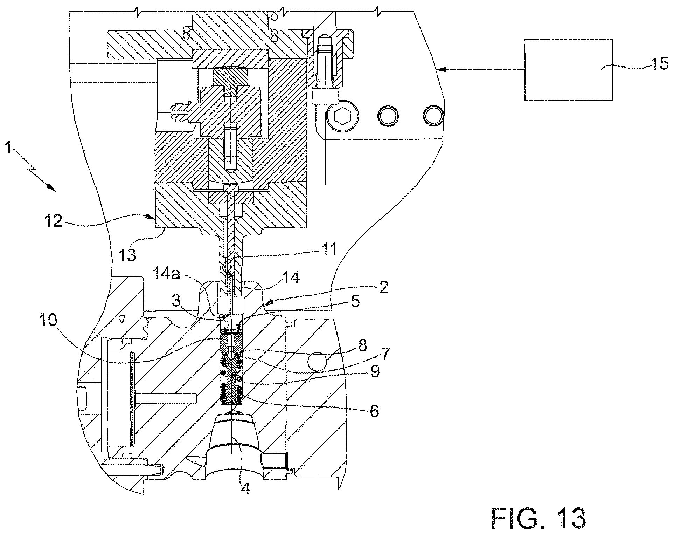

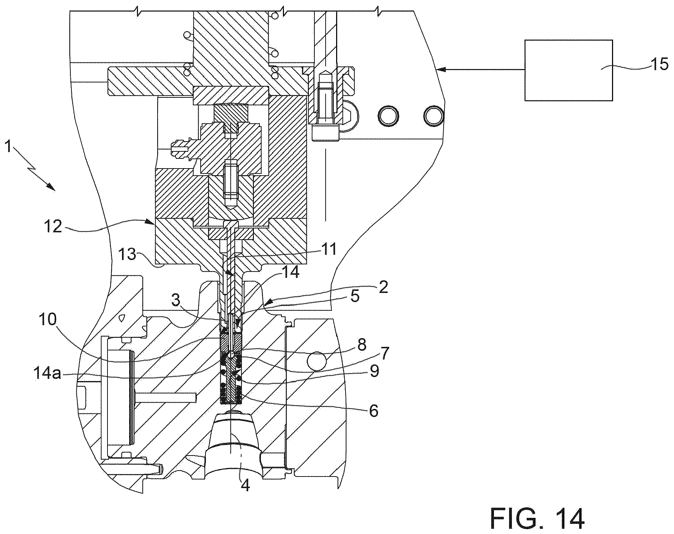

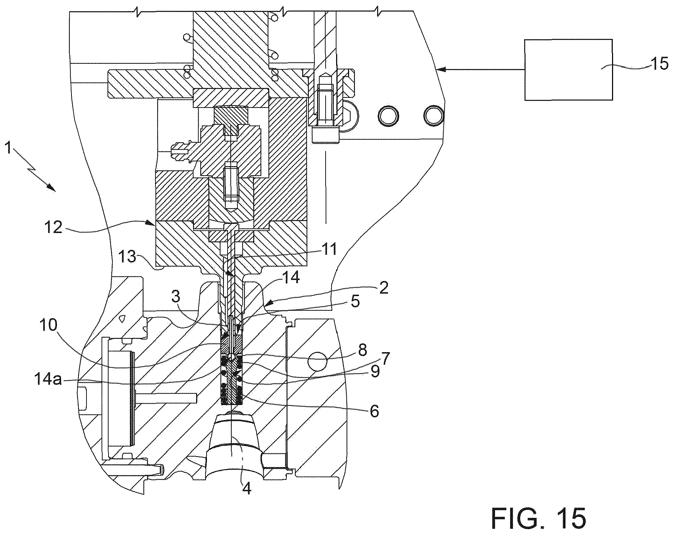

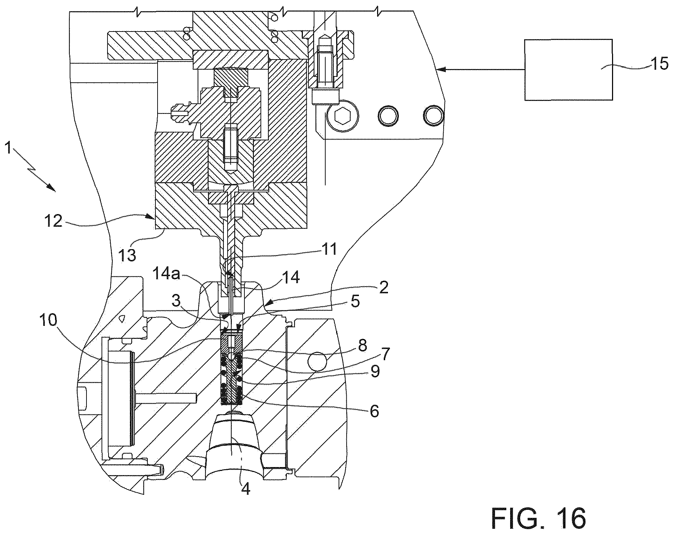

Block 220 is followed by block 100 (and by the following bocks 110-140), which repeats the precisely performed operations to be carried out to measure the current calibration value, check its acceptability (block 140) and, if necessary, its correction (block 150-180). These further steps carried out to measure and check the current calibration force F' are shown in Figures 13-16 and represent blocks 100-220 of Figure 2.

In detail, the use of a percentage-like reduced height allows to prevent the cylindrical reference element 10 from being excessively fitted into the valve seat 6, thus impeding following operations.

Furthermore, the calibration method disclosed herein offers an algorithm which, with every iteration, simply and efficiently calculates the correct height Δx', which immediately leads to the determination of the reduced correct height % Δx', which, in turn, is used to reposition the reference element 10. If the repositioning is not successful, a further repositioning value is calculated until the repositioning is successful.

Furthermore, the number of steps needed to have a correctly calibrated valve 1 is optimized, as the operating steps of each iteration depend on the operating steps of the previous iteration.

In other words, the calibration method disclosed herein prevents the necessity to deal with serious calibration errors, which might jeopardize the operation of the valve 1, by providing an iterative and adaptive algorithm with an optimized number of operating steps.

Finally, it is clear that the device and the method disclosed and shown herein can be subject to changes and variations, without for this reason going beyond the scope of protection of the invention defined in the appended claims.

For example, the calibration method disclosed herein can be also applied in case of characteristic spring curves that are not linear (i.e. having non-constant elastic constants); in this case, the objective force value Fₜ is chosen within an interval in which the characteristic curve has a stable development, without sudden variations, so that the calibration can take place in a correct manner.

## Claims

1. A method of calibration of a valve (1), wherein a mobile element (7), housed in a seat (6), defining an axis (4), and associated with a spring (9), carries a ball (8), arranged in abutment against a reference element (10), housed in the seat (6), said method using a calibration tool (12), provided with a motorised punch (13), mobile in use, along said axis (4), and provided with a point (14) coaxial to the motorised punch (13), connected to a loading cell and provided with a front end (14a) which protrudes from an end of the punch (13),
the method comprising the realization of a calibration cycle wherein the following steps are carried out:
- achieving the movement (20) of the motorised punch (13), which is arranged in abutment (30) against the reference element (10), said reference element (10) being axially moved and interference fit (40) tightly in the seat (6) ;
- achieving contact (50) between the front end (14a) of the point (14) and the ball (8) and measuring a force F (60), said force F resulting from the elastic reaction of the spring (9), said spring (9) starting to be compressed;
- comparing (70) the measured force F with an objective force Fₜ and blocking (80) the movement of the motorised punch (13) when the measured force F is equal to an objective force Fₜ;
- storing (90), a position xₜ of the motorised punch (13), when the requirements of said comparison are met, said position xₜ being related to the objective force Fₜ;
said method being **characterised in that** it comprises the realization of a second control cycle of the calibration that has been carried out, wherein:
- the motorised punch (13) is arranged (110) again in the stored position and a current calibration force F' applied on the point (14) is detected (130);
- the acceptability (14) of said current calibration force F' is checked, wherein, if said current calibration force F' is considered acceptable, the method is ended; instead, if said current calibration force F' is not considered acceptable, a correct quota Δx' is calculated (170) based on a force difference ΔF (150) and based on the elastic constant k of the spring (160), said force difference ΔF being defined (150) as the difference between the objective force Fₜ and the current calibration force F' ;
- the motorised punch (13) is moved (200) so as to arrange it in a position related with the correct quota Δx' and detect the force value applied on the point (14) in said position; and
the calibration control cycle is repeated.

2. The method according to claim 1, wherein said step of controlling the acceptability comprises the step of checking if the current calibration force F' ranges between an upper force limit F₂ and a lower force limit F₁.

3. The method according to claim 1 or 2, wherein the steps of calculating a reduced correct quota %Δx' are provided by calculating a percentage of the calculated correct quota Δx'; and moving the motorised punch (13) so as to arrange it in a position corresponding to the determined reduced correct quota %Δx'.

4. The method according to any one of the preceding claims, wherein said control cycle of the calibration that has been carried out further comprises an initial retraction step (100) of said motorised punch (13) carried out prior to the step of positioning said motorised punch (13) in said memorized position (xₜ).

5. The method according to any one of the preceding claims, wherein said control cycle of the calibration that has been carried out further comprises a subsequent retraction step (190) of said motorised punch (13) carried out prior to the step of positioning the motorised punch (13) in the position related to the correct quota (Δx').

6. The method according to any one of the preceding claims, wherein said elastic constant (k) is calculated based on the magnitude determined in said first calibration cycle.

## Patentansprüche

1. Verfahren zur Kalibrierung eines Ventils (1), wobei ein mobiles Element (7), das in einem Sitz (6) untergebracht ist, eine Achse (4) definiert und mit einer Feder (9) verbunden ist, eine Kugel (8) trägt, an einem Bezugselement (10) anliegend angeordnet ist, das im Sitz (6) untergebracht ist, wobei das Verfahren ein Kalibrierwerkzeug (12) verwendet, das mit einem motorisierten Stempel (13) versehen ist, der entlang der Achse (4) mobil im Gebrauch ist, und mit einer mit dem motorisierten Stempel (13) koaxialen Spitze (14) versehen ist, die mit einer Kraftmessdose verbunden und mit einem Vorderende (14a) versehen ist, das aus einem Ende des Stempels (13) herausragt,
wobei das Verfahren die Realisierung eines Kalibrierungszyklus umfasst, bei dem die folgenden Schritte ausgeführt werden:
- Bewirken der Bewegung (20) des motorisierten Stempels (13), der an dem Bezugselement (10) anliegend angeordnet (30) ist, wobei das Bezugselement (10) in Achsrichtung bewegt und in Presspassung (40) fest in den Sitz (6) gepresst wird;
- Herstellen von Kontakt (50) zwischen dem Vorderende (14a) der Spitze (14) und der Kugel (8) und Messen einer Kraft F (60), wobei die Kraft F aus der elastischen Reaktion der Feder (9) resultiert und die Feder (9) beginnt, zusammengedrückt zu werden;
- Vergleichen (70) der gemessenen Kraft F mit einer objektiven Kraft Fₜ und Blockieren (80) der Bewegung des motorisierten Stempels (13), wenn die gemessene Kraft F gleich einer objektiven Kraft Fₜ ist;
- Speichern (90) einer Position xₜ des motorisierten Stempels (13), wenn die Anforderungen des Vergleichs erfüllt sind, wobei die Position xₜ mit der objektiven Kraft Fₜ in Beziehung steht;
wobei das Verfahren **dadurch gekennzeichnet ist, dass** es die Realisierung eines zweiten Kontrollzyklus der ausgeführten Kalibrierung umfasst, wobei:
- der motorisierte Stempel (13) wieder in der gespeicherten Position angeordnet (110) ist und eine auf die Spitze (14) ausgeübte aktuelle Kalibrierungskraft F' erfasst wird (130);
- die Annehmbarkeit (14) der aktuellen Kalibrierungskraft F' geprüft wird, wobei das Verfahren beendet ist, wenn die Kalibrierungskraft F' als annehmbar angesehen wird; wenn stattdessen die aktuelle Kalibrierungskraft F' nicht als annehmbar angesehen wird, anhand einer Kraftdifferenz ΔF (150) und anhand der elastischen Konstante k der Feder (160) eine Korrigierquote Δx' berechnet (170) wird, wobei die Kraftdifferenz ΔF als Differenz zwischen der objektiven Kraft Fₜ und der aktuellen Kalibrierungskraft F' definiert (150) ist;
- der motorisierte Stempel (13) so bewegt (200) wird, dass er in einer zur Korrigierquote Δx' in Beziehung stehenden Position angeordnet ist und der in dieser Position auf die Spitze (14) ausgeübte Kraftwert erfasst wird; und
der Kalibrierungszyklus wiederholt wird.

2. Verfahren nach Anspruch 1, wobei der Schritt des Kontrollierens der Annehmbarkeit den Schritt des Prüfens umfasst, ob die aktuelle Kalibrierungskraft F' zwischen einem oberen Kraftgrenzwert F₂ und einem unteren Kraftgrenzwert F₁ liegt.

3. Verfahren nach Anspruch 1 oder 2, wobei die Schritte des Berechnens einer reduzierten Korrigierquote %Δx' durch Berechnen eines Prozentsatzes der berechneten Korrigierquote Δx' und Bewegen des motorisierten Stempels (13) zu dessen Anordnung in einer der bestimmten reduzierten Korrigierquote %Δx' entsprechenden Position erfolgen.

4. Verfahren nach einem der vorstehenden Ansprüche, wobei der ausgeführte Kontrollzyklus der Kalibrierung weiterhin einen anfänglichen Einfahrschritt (100) des motorisierten Stempels (13) umfasst, der vor dem Schritt des Anordnens des motorisierten Stempels (13) in der gespeicherten Position (xt) ausgeführt wird.

5. Verfahren nach einem der vorstehenden Ansprüche, wobei der ausgeführte Kontrollzyklus der Kalibrierung weiterhin einen nachfolgenden Einfahrschritt (190) des motorisierten Stempels (13) umfasst, der vor dem Schritt des Anordnens des motorisierten Stempels (13) in der mit der Korrigierquote in Beziehung stehenden Position (Δx') ausgeführt wird.

6. Verfahren nach einem der vorstehenden Ansprüche, wobei die elastische Konstante (k) anhand der im ersten Kalibrierungszyklus bestimmten Größe berechnet wird.

## Revendications

1. Procédé d'étalonnage d'une soupape (1), dans lequel un élément mobile (7), logé dans un siège (6), définissant un axe (4), et associé à un ressort (9), porte une bille (8), disposée en butée contre un élément de référence (10), logé dans le siège (6), ledit procédé utilisant un outil d'étalonnage(12), muni d'un poinçon motorisé (13), mobile en utilisation, selon ledit axe (4), et pourvu d'un point (14) coaxial au poinçon motorisé (13), relié à une cellule de chargement et pourvu d'une extrémité avant (14a) qui dépasse d'une extrémité du poinçon (13),
le procédé comprenant la réalisation d'un cycle d'étalonnage dans lequel les étapes suivantes sont effectuées:
- la réalisation du mouvement (20) du poinçon motorisé (13), qui est disposé en butée (30) contre l'élément de référence (10), ledit élément de référence (10) étant déplacé axialement et ajusté (40) fermement dans le siège (6) ;
- l'établissement d'un contact (50) entre l'extrémité avant (14a) du point (14) et la bille (8) et la mesure d'une force F (60), ladite force résultant de la réaction élastique du ressort (9), ledit ressort (9) commençant à être compressé ;
- la comparaison (70) de la force mesurée F à une force objective F^{t} et le blocage (80) du mouvement du poinçon motorisé (13) lorsque la force mesurée F est égale à une force objective Fₜ ;
- la mémorisation (90), de la position Xₜ du poinçon motorisé (13), lorsque les exigences de ladite comparaison sont remplies, ladite position Xₜ étant liée à la force d'objectif Fₜ ;
ledit procédé étant **caractérisé en ce qu'**il comprend la réalisation d'un deuxième cycle de contrôle de l'étalonnage qui a été effectué, dans lequel:
- le poinçon motorisé (13) est à nouveau agencé (110) dans la position mémorisée et une force d'étalonnage de courant F' appliquée sur le point (14) est détectée (130) ;
- l'acceptabilité (14) de ladite force d'étalonnage actuelle F' est vérifiée, dans laquelle, si ladite force d'étalonnage actuelle F' est considérée comme acceptable, le procédé est terminé ; au lieu de cela, si ladite force d'étalonnage actuelle F' n'est pas considérée comme acceptable, un quota correct Δx' est calculé (170) sur la base d'une différence de force AF (150) et sur la base de la constante élastique k du ressort (160), ladite différence de force ΔF étant définie (150) comme la différence entre la force d'objectif Fₜ et la force d'étalonnage actuelle F';
- le poinçon motorisé (13) est déplacé (200) de manière à le disposer dans une position liée au quota correct Δx' et à détecter la valeur de force appliquée sur le point (14) dans ladite position ; et
le cycle de commande d'étalonnage est répété.

2. Procédé selon la revendication 1, dans lequel ladite étape de contrôle de l'acceptabilité comprend l'étape de vérification si la force d'étalonnage actuelle F' est comprise entre une limite de force supérieure F₂ et une limite de force inférieure F₁.

3. Procédé selon la revendication 1 ou 2, dans lequel les étapes de calcul d'un quota correct réduit %Δx' sont fournies en calculant un pourcentage du quota correct calculé Δx' ; et en déplaçant le poinçon motorisé (13) de manière à le disposer dans une position correspondant au pourcentage correct réduit déterminé %Δx'.

4. Procédé selon l'une des revendications précédentes, dans lequel ledit cycle de commande de l'étalonnage qui a été effectué comprend en outre une étape de rétraction initiale (100) dudit poinçon motorisé (13) effectuée avant l'étape de positionnement dudit poinçon motorisé (13) dans ladite position mémorisée (xₜ).

5. Procédé selon l'une des revendications précédentes, dans lequel ledit cycle de commande de l'étalonnage qui a été effectué comprend en outre une étape de rétraction ultérieure (190) dudit poinçon motorisé (13) effectuée avant l'étape de positionnement du poinçon motorisé (13) dans la position liée au quota correct (Δx').

6. Procédé selon l'une des revendications précédentes, dans lequel ladite constante élastique (k) est calculée sur la base de la magnitude déterminée dans ledit premier cycle d'étalonnage.
